# EUROPEAN PATENT APPLICATION

(11) **EP 3 244 585 A1**
(43) Date of publication of application: **15.11.2017**
(21) Application number: 16305557.7
(22) Date of filing: 12.05.2016
(51) Int. Cl.: H04L 27/26

(54) **APPARATUS AND METHOD FOR COMBINING CORE AND ENHANCED LAYER PIPES IN LAYERED DIVISIONAL MULTIPLEXING**

(71) Applicant: Thomson Licensing, 92130 Issy-les-Moulineaux (FR)
(72) Inventor: FONTAINE, Loïc, 35576 CESSON-SEVIGNE (FR); PESIN, Anthony, 35576 CESSON-SEVIGNE (FR)
(74) Representative: Huchet, Anne

(57) **Abstract**

The present disclosure relates to the combination of one or more core and enhanced physical layer pipes in layered divisional multiplexing (LDM) for use in digital television systems. In one example, a core layer with at least one physical layer pipe is provided. An enhanced layer with at least one physical layer pipe is also provided. The core layer and the enhanced layer are combined to provide a layered division multiplexed signal. The layer division multiplexed signal is time interleaved to provide a time interleaved signal for transmission. Furthermore, a layered division multiplexing frame is formed before the time interleaving of the layered division multiplexed signal by the time interleaver for grouping the at least one physical layer pipe of the core layer with at least one corresponding physical layer pipe of the enhanced layer.

## Description

### TECHNICAL FIELD

The present principles generally relate to communication systems and methods, and in particular to combing one or more core and enhanced physical layer pipes in layered divisional multiplexing (LDM) for use in digital television systems.

### BACKGROUND

On March 26, 2013, the Advanced Television Systems Committee (ATSC), which proposes terrestrial broadcasting digital television standards in the U.S., announced a call for proposals for the next generation (named ATSC 3.0) physical layer. ATSC 3.0 will provide even more services to the viewer and increased bandwidth efficiency and compression performance. This will require breaking backward compatibility with the currently deployed version, ATSC A/53, which comprises an 8-VSB (8 level, Vestigial Sideband) modulation system. ATSC 3.0 is expected to emerge within the next decade and it intends to support delivery to fixed devices of content with video resolutions up to Ultra High Definition 3840 x2160 at 60 frames per second (fps). The intention of the system is to also support delivery to portable, handheld and vehicular devices of content with video resolution up to High Definition 1920x1080 at 60 fps. The system is also expected to support lower video resolutions and frame rates.

One of the main issues associated with the current ATSC standard is the vulnerability of the 8-VSB modulation system to multipath propagation and Doppler Effect. These impairments are present in the broadcast transmission environment, particularly in large metropolitan cities, and in the delivery to portable/handheld/vehicular devices which ATSC 3.0 intends to support. It is a consensus that multi-carrier modulation systems like, for example, the orthogonal frequency division multiplexing (OFDM) modulation, are better choices of modulation to combat these impairments.

OFDM is a method of encoding digital data on multiple carrier frequencies. In OFDM, the sub-carrier frequencies are chosen so that the sub-carriers are orthogonal to each other, meaning that cross-talk between the subchannels is eliminated and inter-carrier guard bands are not required. This greatly simplifies the design of both the transmitter and the receiver; unlike conventional frequency divisional multiplexing (FDM), a separate filter for each sub-channel is not required. The orthogonality allows for efficient modulator and demodulator implementation using the fast Fourier transform (FFT) algorithm on the receiver side, and inverse FFT on the transmitter side. In particular, the size of the FFT identifies the number of carriers in the OFDM modulation system. Frequency selective channels are characterized either by their delay spread or coherence bandwidth. In a single carrier system like 8-VSB, a single fade or interference can cause the whole link to fail, but in multi-carrier systems, like OFDM, only a few of the total sub carriers will be affected. This way, multipath fading can be easily eliminated in OFDM, with simpler equalization techniques than in single carrier systems.

The OFDM modulation is already adopted in other digital terrestrial television standards, e.g., the DVB-T/DVB-T2 standards in Europe, and the ISDB-T standard in Japan. DVB-T2 uses the same error correction coding as used in DVB-S2 and DVB-C2: low density parity check (LDPC) coding combined with Bose-Chaudhuri-Hocquengham (BCH) coding, offering a very robust signal. The number of carriers, guard interval sizes and pilot signals can be adjusted, so that the overheads can be optimized for any target transmission channel. DVB-T2 offers more robustness, flexibility and at least 50% more efficiency than any other digital television system. It supports SD, HD, UHD, mobile TV, or any combination thereof.

Within the DVB family there is also a standard, DVB-SI, which is specifically used for metadata, or Service Information (SI). The standard allows for metadata or auxiliary service information to accompany broadcast signals and is intended to assist the receiver/decoder and viewers to navigate through the growing array of digital services on offer. Within DVB-SI, channel acquisition and tuning information are specified. In addition, the Event Information Table (EIT) is used as a means of communicating program ("event") information. The EIT can be used to give information such as the program title, start time, duration, a description and parental rating. It is also possible to classify programs using what are known as "content descriptors", identifying the content from a set of categories and subcategories. DVB-SI is similar to the exiting ATSC Program System Information Protocol (PSIP) standards which are used to carry metadata or auxiliary service information for the existing ATSC digital television service.

The current DVB-T2 system also contains a feature called physical layer pipes (PLP), which represent different services or virtual channels within the data stream of one physical channel (or spectral band). A DVB-T2 signal may contain multiple PLPs. This feature allows for differing types of data to be sent with differing data rates and amounts of error correction. Further up the communication stack, there is information in the DVB-SI information that maps the PLPs to their content. For example, the DVB-SI may describe which PLP contains a program video and which other PLP contains a program audio. The PLP terminology and concept is likely to be used in some forms in ATSC 3.0.

In addition, one ATSC 3.0 candidate standard intends to introduce a new technology called layered division multiplexing (LDM). The LDM is a constellation superposition technology that combines multiple data streams at different power levels, possibly with different modulation and channel coding schemes before transmission in one RF channel. In one example, a core layer and an enhanced layer are combined using layered division multiplexing. Typically, the core layer uses an equal or more robust modulation-code rate combination than the enhanced layer.

### BRIEF SUMMARY

Accordingly, an exemplary apparatus is present, comprising: a first bit interleaved and coded modulation unit configured to provide a core layer with at least one physical layer pipe; a second bit interleaved and coded modulation unit configured to provide an enhanced layer with at least one physical layer pipe; a layered division multiplexing injector configured to combine the core layer and the enhanced layer for providing a layered division multiplexed signal; and a time interleaver configured to time interleave the layer division multiplexed signal to provide a time interleaved signal for transmission; wherein the apparatus further comprising a layered divisional multiplexing frame builder unit configured to form a layered division multiplexing frame before the time interleaving of the layered division multiplexed signal by the time interleaver for grouping the at least one physical layer pipe of the core layer with at least one corresponding physical layer pipe of the enhanced layer.

In another exemplary embodiment, a method is presented comprising: providing, via a first bit interleaved and coded modulation unit, a core layer with at least one physical layer pipe; providing, via a second bit interleaved and coded modulation unit, an enhanced layer with at least one physical layer pipe; combing, via a layered division multiplexing injector, the core layer and the enhanced layer to provide a layered division multiplexed signal; and time interleaving, via a time interleaver, the layer division multiplexed signal to provide a time interleaved signal for transmission; wherein the method further comprising forming, via a layered divisional multiplexing frame builder unit, a layered division multiplexing frame before the time interleaving of the layered division multiplexed signal by the time interleaver for grouping the at least one physical layer pipe of the core layer with at least one corresponding physical layer pipe of the enhanced layer.

In another exemplary embodiment, a computer program product stored in a non-transitory computer-readable storage medium is presented, comprising computer-executable instructions for: providing a core layer with at least one physical layer pipe; providing an enhanced layer with at least one physical layer pipe; combing the core layer and the enhanced layer to provide a layered division multiplexed signal; and time interleaving the layer division multiplexed signal to provide a time interleaved signal for transmission; wherein the instructions further comprising forming a layered division multiplexing frame before the time interleaving of the layered division multiplexed signal by the time interleaver for grouping the at least one physical layer pipe of the core layer with at least one corresponding physical layer pipe of the enhanced layer.

In another exemplary embodiment, an apparatus is presented, comprising: an OFDM and equalization unit configured to provide an OFDM decoded and equalized baseband data stream; a frame extraction unit configured to extract from the baseband data stream, before time de-interleaving, a layered divisional multiplexing frame, wherein the layered divisional multiplexing frame is for grouping the at least one physical layer pipe of a core layer with at least one corresponding physical layer pipe of an enhanced layer in the layered divisional multiplexing frame, and the layered divisional multiplexing frame is formed at a transmitter before the time interleaving by a time interleaver at the transmitter.

### BRIEF DESCRIPTION OF THE DRAWINGS

The present principles may be better understood in accordance with the following exemplary figures briefly described below:
Fig. 1 illustrates a simplified block diagram of a general digital communication system applicable to the digital broadcasting channel;
Fig. 2 illustrates an exemplary frame structure of a proposed ATSC 3.0 digital television system;
Fig. 3 illustrates an exemplary transmitter according to the present principles;
Fig. 4 illustrates an exemplary receiver according to the present principles;
Fig. 5 illustrates a LDM frame according to the present principles;
Fig. 6 illustrates an exemplary process according to the present principles; and
Fig. 7 illustrates another exemplary process according to the present principles.

### DETAILED DISCUSSION OF THE EMBODIMENTS

The present principles relate to communication systems and methods, and in particular to combing one or more core and enhanced physical layer pipes in layered divisional multiplexing (LDM) for use in digital television systems.

Other than the inventive concept, several elements hereby discussed are well known and will not be described in detail. For example, other than the inventive concept, familiarity with the second generation digital terrestrial television broadcasting system for Digital Video Broadcasting (DVB-T2) is assumed and not described herein. In this regard, familiarity with the standards and recommended practices of ETSI EN 302 755 and ETSI TS 102 832 is assumed and not described herein. In addition, familiarity with the DVB standard for metadata, or Service Information (SI) is assumed and not described herein. In this regard, familiarity with the ETSI EN 300 468 specification is assumed.

Also, familiarity with the digital terrestrial television broadcasting system for the US (ATSC) is assumed and not described herein. In this regard, familiarity with the standards and recommended practices of ATSC A/53, A/153, A/54, A/65, and etc., is assumed and not described herein.

The present description illustrates the present principles. It will thus be appreciated that those skilled in the art will be able to devise various arrangements that, although not explicitly described or shown herein, embody the present principles and are included within its scope. All examples and conditional language recited herein are intended for pedagogical purposes to aid the reader in understanding the present principles and the concepts contributed by the inventors to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment", "an embodiment", "an exemplary embodiment" of the present principles, or as well as other variations thereof, means that a particular feature, structure, characteristic, and so forth described in connection with the embodiment is included in at least one embodiment of the present principles. Thus, the appearances of the phrase "in one embodiment", "in an embodiment", "in an exemplary embodiment", or as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

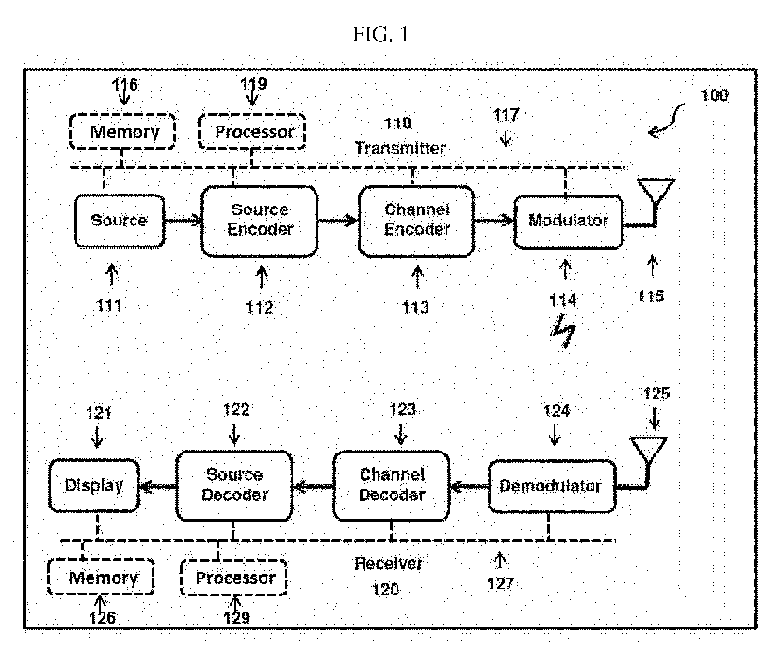

Fig. 1 shows a simplified block diagram 100 of a general digital communication system applicable to the digital broadcasting channel, independent of the modulation system and system architecture. The transmitter device 110 includes the following components:
- a source 111 for the audio, video, signaling or control and other ancillary data (e.g., channel and system information, and program guide information);
- a source encoder 112, including audio and video encoders to compress the audio and video data;
- a channel encoder 113 including at least some of the functions of randomizing, interleaving, channel coding and frame mapping to process the compressed, signaling and ancillary digital data for robustness and to add levels of error correcting encoding functionality;
- a modulator 114 to convert the processed digital data into modulation symbols, which can be, for example, VSB (ATSC) or OFDM (e.g., DVB-T2, ATSC 3.0, etc.). In addition, it includes the functionality of filtering and digital-to-analog (D/A) conversion; and
- an antenna 115 representing the functionalities of up-conversion, RF amplification and over-the-air broadcasting.

At the receiver device 120 of Figure 1, the inverse functions of the transmitter are performed, including the following components:
- an antenna for reception 125, which includes the functionalities of over-the-air reception, RF down-conversion and tuning;
- a demodulator 124 to recover the digital data from the modulation symbols and includes the functionalities of analog-to-digital conversion (D/A), gain control, carrier and symbol timing recovery, equalization and header or preamble sync detection;
- a channel decoder 123 to recover the compressed and ancillary data by performing the inverse functionalities of the channel encoder, including error correcting decoding, de-interleaving and de-randomizing;
- a source decoder 122 to decompress the audio and video data, including video and audio decoders; and
- a display device 121 for audio/video viewing.

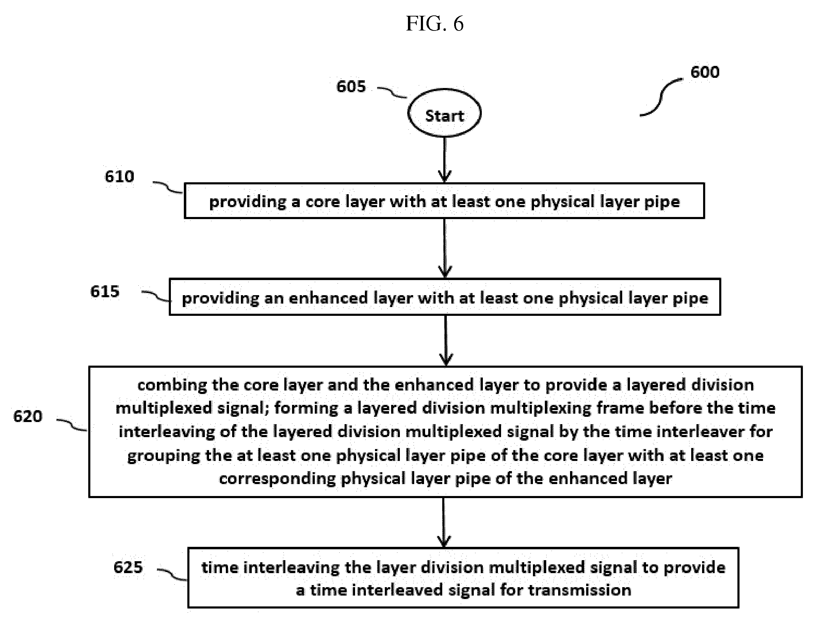

As shown in Fig. 1, the exemplary transmitter 110 may also comprise a processor 119 for processing various data and for controlling various functions and components 111-117 of the transmitter 110. The processor 119 communicates with and controls the various functions and components of the transmitter 110 via a control bus 117 as shown in Fig. 1. Likewise, the exemplary receiver 120 in Fig. 1 may also comprise a processor 129 for processing various data and for controlling various functions and components 121-127 of the receiver 120. The processor 129 communicates with and controls the various functions and components of the receiver 120 via a control bus 127 as shown in Fig. 1. In addition, a respective memory 116 and 126 may be provided for each of the transmitter 110 and receiver 120 as shown in Fig. 1. The memory 116 and memory 126 which may represent both a transitory memory such as RAM, and a non-transitory memory such as a ROM, a hard drive, a CD drive, a Blu-ray drive, and/or a flash memory, are for processing and storing different files and information as necessary, including computer program products and software (e.g., as represented by the flow chart diagram of Fig. 6, as to be discussed below), webpages, user interface information, various databases, and etc., as needed.

A person skilled in the art will appreciate that the one or more of processors 119, 129, memories 116 and 126, and control bus 117 and 127 shown in Fig. 1 may not be needed (e.g., as represented by the dashed lines and dashed enclosures), depending on the particular implementation of hardware, software and the combination thereof, as is well known in the art. Also, a person skilled in the art will also appreciate that a source encoder 112 and a channel encoder 113, although common in general communications systems, may not be needed for a system according to the present principles. Similarly, depending on the transmitter, a source decoder 122 and a channel decoder 123, although common in general communications systems, also may not be needed for a system according to the present principles. In addition, the transmitter and receiver may not require an antenna, if the transmission system is other than over-the-air (e.g., over cable). Furthermore, a receiving device may include, but is not limited to: a television, a set-top box, a computer, a mobile phone, an automobile receiver and a tablet.

Furthermore, at the receiver 120, demodulation 124 is first performed to acquire the signaling data at a signaling data detector and set the receiver parameters accordingly. If the signaling data was channel encoded at the transmitter (at channel encoder 113), the signaling data detector must reside inside or after the channel decoder 123; otherwise, it can reside inside or after the demodulator 124. After the signaling data is recovered, the receiver extracts the various parameters contained in the signaling data to set its various modes of operation associated with its various data related blocks (including but not limited to modulation, e.g., constellation size, FFT size; FEC; interleaving; data distribution within the frame, including the various physical layer pipe (PLP) sizes and other parameters; etc.). The parameters are then sent to the various blocks in order for demodulation and decoding to be performed on the video, audio and other ancillary data.

According to the present principles, as an exemplary illustration, a generic system source 111 and source encoder 112 which is implemented to support, e.g. DVB-T2, or the proposed ATSC 3.0 may provide e.g., one or more MPEG-2 transport stream(s), and/or one or more ATSC 3.0 link layer protocol (ALP) packets, and/or one or more generic streams. An input pre-processor (not shown) may be used and may include a service splitter or de-multiplexer for transport streams (TS) for separating the services into the system inputs, which are one or more logical data streams. These are then carried in individual physical layer pipes (PLPs). This feature allows for differing types of data to be sent with differing data rates and amounts of error correction. Further up the communication stack, there is information in e.g., the DVB-SI information or other metadata information that maps the PLPs to their content. For example, the DVB-SI may describe which PLP contains a program video and which other PLP contains a program audio.

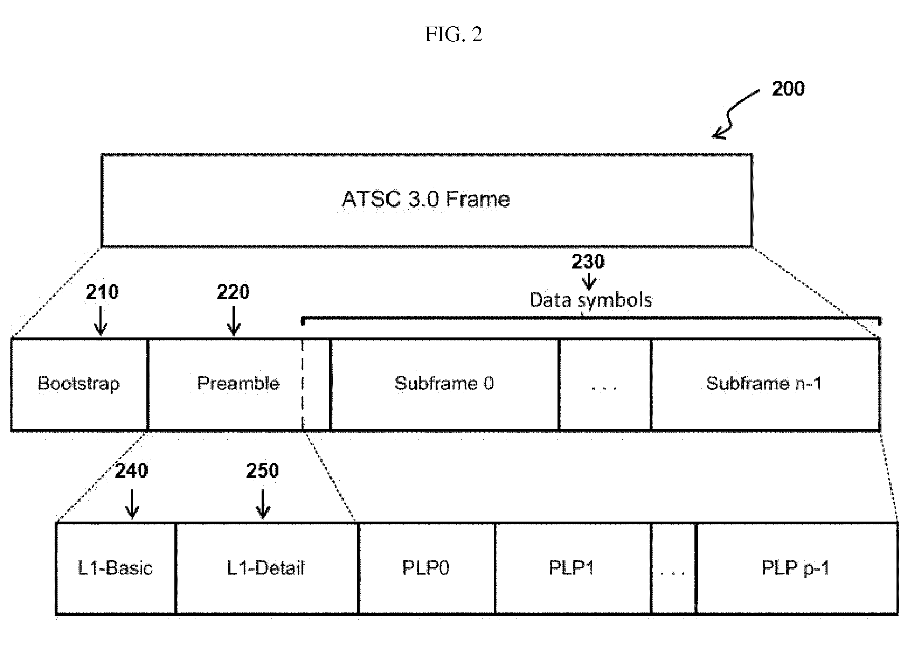

For example, Fig. 2 shows a frame structure 200 of a proposed ATSC 3.0 system. The ATSC 3.0 frame 200 is composed of a bootstrap 210 and a preamble 220, followed by the data symbols 230. The data symbols 230 may contain one or more subframes. The one or more subframes may have one or more PLPs, representing different services: PLP0, PLP1, PLP2, and etc. The preamble 220 includes metadata signaling information L1-Basic 240 and L1-Detail 250 for the system. These signaling fields consist of a plurality of signaling parameters which define the system, including modulation parameters, FEC parameters, frame size, and etc.

One version of the proposed ATSC 3.0 standards, the ATSC3.0 Physical Layer Candidate Standard "S32-230r19-PHY-STD-Working-Draft-2015-08-27_clean.pdf", introduced a new technology called layered division multiplexing (LDM). The LDM is a constellation superposition technology that combines multiple data streams at different power levels, most likely with different modulation and channel coding schemes before transmission in one physical radio frequency (RF) channel.

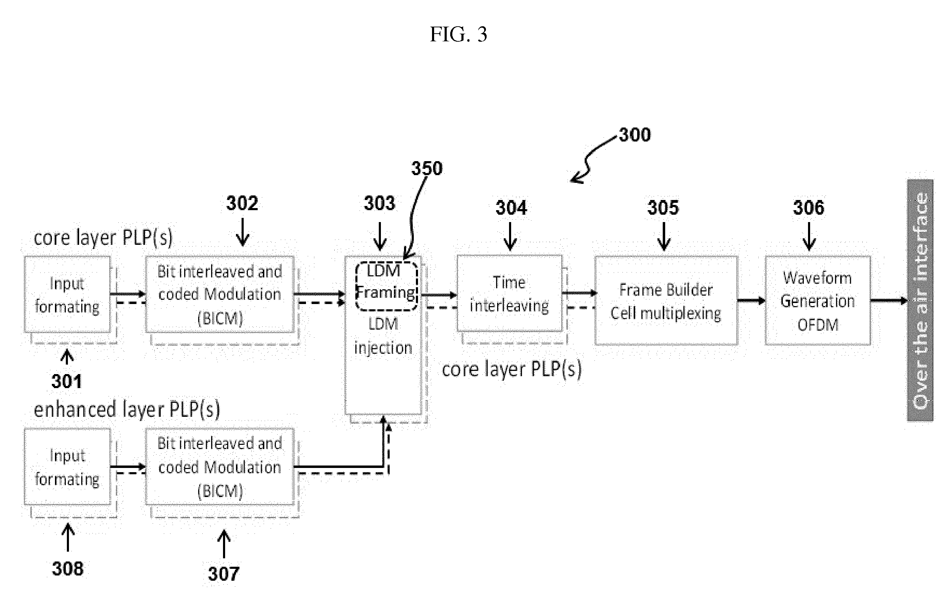

An exemplary block diagram of a proposed ATSC 3.0 LDM transmitter 300 is shown in Fig. 3 and is to be further described below (including the modification according to the present principles). In the above mentioned 2015 ATCS 3.0 Physical layer working-draft, only a two-layer LDM is defined. The two layers are named a core layer as represented by element 301 in Fig. 3, and an enhanced layer as represented by element 308 of Fig. 3. Each of these layers is subject to bit-interleaved and code modulation (BICM) by a respective bit interleaved and code modulation unit or block 302 and 307 as shown in Fig. 3. The proposed two-layer ATSC 3.0 LDM system combines the two BICM layers at unit or block 303 before the time interleaving at unit or block 304 as shown in Fig. 3 and as to be described in more detail below.

Each BICM layer consisting of an encoded sequence modulated to a constellation is also known as a physical layer pipe (PLP), although in this context it is referred to as a layer, since each layer may comprise of one or more PLPs as to be further described below. The two layers are named core and enhanced layers as mentioned above. The core layer uses an equal or more robust modulation-code rate combination than the enhanced layer. The core and enhanced layers are then combined in an LDM injection block 303 as shown in Fig. 3. The injection level of the enhanced layer signal relative to the core layer signal is a transmission parameter which enables distribution of transmission power between the two layers. By varying the injection level at block 303, the transmission robustness of each layer can be changed, providing an additional method apart from the choice of modulation and code rate parameters. The LDM layer with which a PLP is associated is intended to be indicated by a dedicated field L1D_plp_layer in the L1-Detail signaling structure of ATSC 3.0, also as to be described in more detail below.

The time interleaving function at block 304 and the frame builder function at block 305 are performed after the LDM injection function at block 303 as shown in Fig. 3. The time interleaving unit or block 304 separates adjacent PLP data cells to provide time diversity and to improve the robustness of the transmitted information in mobile reception environment. The frame builder cell multiplexing unit or block 305 performs the cells multiplexing and mapping of the PLPs' cells to the data OFDM sub-carriers of each ATSC 3.0 subframe.

The time interleaving and the cell multiplexing functions as shown in element 305 of Fig. 3 are to be performed based on the core layer PLPs. The enhanced layer PLP(s) then follow(s) the time interleaving and cell multiplexing of the core layer PLP(s). The cells multiplexing are intended to be signaled in the so called L1-Detail signaling structure with 2 fields. The starting position of a PLP L1D_plp_start shall be the index of the OFDM data subcarrier assigned to hold the first data cell value of the PLP. The length of a PLP L1D_plp_size indicates the total number of data cells contained by the PLP for the current subframe. The starting position and length of every PLP present in a subframe are signaled, regardless of whether or not LDM is used.

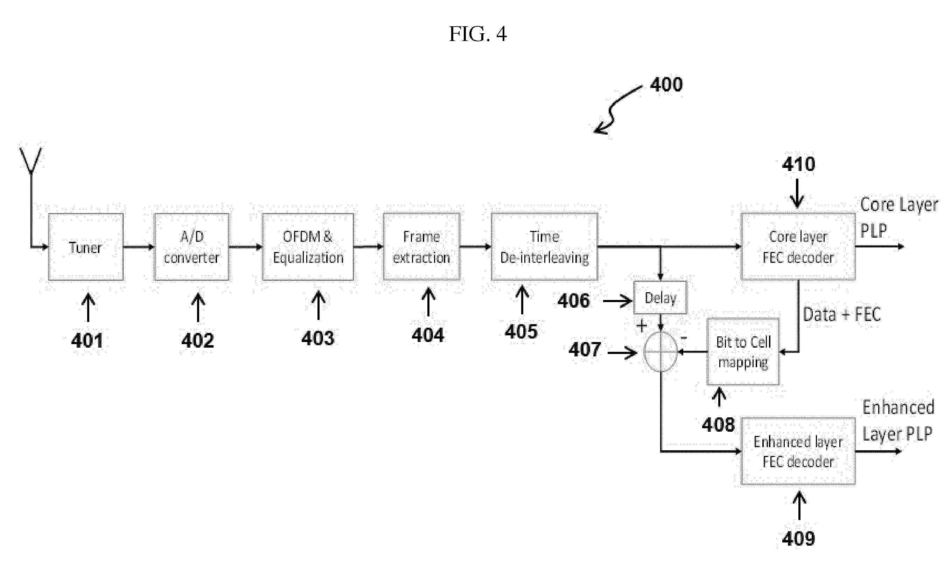

An exemplary block diagram of a proposed ATSC 3.0 LDM receiver 400 which is capable of decoding the two-layer signal comprising a core and an enhanced layer of PLPs is shown in Fig. 4. According to the above 2015 ATSC 3.0 working draft, an ATSC 3.0 signal is received and tuned to by a digital tuner 401 in the exemplary ATCS 3.0 receiver 400 as shown in Fig. 4. The tuned signal is then A/D converted by an A/D converter 402 and then processed by an OFDM and equalization unit or block 403 to recover the baseband data stream. Also according to the present ATSC 3.0 proposal as shown in Fig. 4, the frame extraction unit or block 404 extracts the baseband data cells of the core layer PLPs using the information provided in the L1-Detail signaling fields L1D_plp_start and L1D_plp_size, as described above in connection with the exemplary transmitter 300. The data cells are then time de-interleaved using the time de-interleaving unit or block 405.

The LDM decoding is then performed after the time de-interleaving is performed at block 405. The LDM decoding is performed by units or blocks 406-410 of the receiver 400 shown in Fig. 4. First, the forward error correction (FEC) decoding of the core layer PLP(s) is performed at core layer FEC decoder 410 of Fig. 4. The decoded data and FEC of the core layer PLPs are then remapped to the cells in unit or block 408 of Fig. 4, inversely as to what had been performed in the BICM transmitter block 302 of Fig. 3. The core layers PLP remapped cells from block 408 are subtracted from the time de-interleaved and delayed output (delayed by block 406) at unit or block 407 to obtain the enhanced layer PLP cells which are then decoded by the enhanced layer FEC decoder 409 as shown in Fig. 4.

According to an exemplary aspect of the present principles, the present inventors recognize that problems exist in the current 2015 ATSC 3.0 working draft as described above that will need to be improved and/or solved in order for the proposed LDM system to work properly. For example, the present inventors recognize that although Section 7.2.7.4 of the above mentioned ATSC 3.0 Physical layer 2015 working draft shows and allows for several examples of the proposed LDM system with one or more PLP(s) in the core layer and one or more PLP(s) in the enhanced layer, the proposed working draft ATSC 3.0 receiver has no information to know which PLP(s) in the core layer it shall decode in order to retrieve the corresponding cells of the respective enhanced layer PLP(s).

That is, the present inventors have recognized that there is currently no field explicitly defined in the proposed ATSC 3.0 L1-Details signaling structure to indicate the relationship between the PLPs in the core layer and the corresponding PLPs in the enhanced layer in the proposed LDM system. The present inventors have also recognized that although there exists a L1-Detail structure which has a field named L1D_plp_start that is set by the frame builder unit or block 305 in Fig. 3, this information cannot be given to the receiver to derive information for the enhanced layer PLP since the time interleaving function at block 304 is performed between the LDM injection unit or block 303 and the frame builder cell multiplexing unit or block 305. As the time interleaver block 304 integrally mixes the core layer cells with the associated enhanced layer cells, it will be impossible to know the start index of the enhanced layer PLPs. The present inventors also have recognized that although the above mentioned 2015 ATSC 3.0 physical layer working draft introduces an implicit index called time interleaver groups (TI_group), this index is not carried in the L1-Detail signaling structure and thus is not used to recover the enhanced layer PLPs.

Accordingly, in order to allow a versatile multiplexing and demultiplexing of multiple PLPs in the core and enhanced layers, the present inventors propose creating a LDM frame before the time interleaving at the transmitter. The LDM framing would group together the core and the enhanced layer PLPs which are LDM multiplexed. The LDM framing allows the receiver to know which PLPs in the core Layer shall be decoded to retrieve the data in the corresponding enhanced Layer PLPs. The core and enhanced layer PLPs are combined by the LDM injection block. The LDM frames can then be processed as proposed by the 2015 working draft such as by the functions of the time interleaving 304, frame builder cell multiplexing 305, and OFDM waveform generation 306 as shown in Fig. 3, as described before.

According to another exemplary aspect of the present principles, the LDM framing may be performed by an exemplary LDM frame forming unit or block 350 as shown in Fig. 3. In one exemplary embodiment, the LDM framing function may be a part of the LDM injection function at unit or block 303 as shown in Fig. 3. In other non-limiting examples, the LDM frame forming unit or block may be a separate unit from the LDM injection unit (not shown). In any case, the LDM framing according to the present principles is to be performed before the time interleaving function at block 304 in Fig. 3 as described above.

According to another aspect of the present principles, the corresponding LDM framing information is then encoded and conveyed to the ATSC receiver using dedicated fields in the ATSC 3.0 L1-Detail signaling structure: L1D_LDM_group_id, L1D_plp_start and L1D_plp_size. The L1D_LDM_group_id field is an identifier associated to each PLP. All PLPs having the same LDM group identifier L1D_LDM_group_id are in the same LDM frame. This would allow grouping together all the core and enhanced layer PLPs which are combined by LDM. By using this L1D_LDM_group_id identifier, the receiver can know which core layer PLPs must be decoded to receive the enhanced layer PLPs. The core layer PLPs belonging to one LDM frame shall be concatenated in order to form a continuous frame. So, the total length of a LDM frame is the sum of all the length of the core layer PLPs in the LDM frame.

According to another exemplary aspect of the present principles, the L1D_plp_start field would have a new meaning for the PLP in the enhanced layer. The L1D_plp_start indicates the offset of first cells of the current PLP from the beginning of the first cell of the first core layer PLP within the same LDM group. In other word, it is the distance in number of cells between the start of the first core layer PLP and the start of current enhanced layer PLP. The L1D_plp_size field would also have a new meaning for the PLP in the enhanced layer. The L1_D_plp size would indicate the length of the current PLP. L1_D_plp_size and L1D_plp_start are computed before the time interleaving of the core layer PLPs.

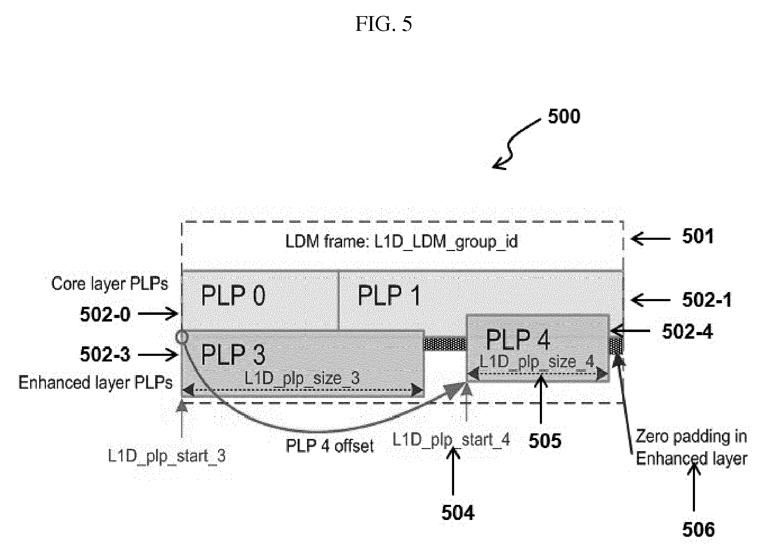

An example of a LDM frame 500 according to the present principles is shown in Fig. 5. As described above, the LDM frame 500 comprises a L1D_LDM_group_id field 501 which is an identifier associated to each PLP in the LDM frame. All PLPs having the same LDM group identifier L1D_LDM_group_id are in the same LDM frame 500. The exemplary LDM frame also comprises two exemplary core layer PLPs, PLP 0 502-0 and PLP 1 502-1. Each of these core layer PLPs also has a corresponding enhanced layer PLP, PLP 3 502-3 and PLP 4 502-4 respectively. In addition, as described above, for example, L1D_plp_start_4 504 for the enhanced layer PLP 4 502-4 indicates the offset (PLP 4 offset) of the first cell of the current PLP 4 502-4 from the beginning of the first cell of the first core layer PLP 0 502-0 within the same LDM frame 500. In addition, for example, L1D_plp_size_4 505 indicates the length of the current enhanced layer PLP 4 502-4. In this example, the receiver will have to decode the core layer PLP 0 502-0 and PLP 1 502-1 to get the data in the corresponding enhanced layer PLP 3 502-3 and PLP 4 502-4. In some exemplary transmissions, the total length of all PLPs in the enhanced layer may be lower than, e.g., a fixed length of an exemplary LDM frame according to one exemplary aspect of the present principles. In that case, the unused cells in the enhanced layer may be filled with zero padding, as shown in 506 of Fig. 5.

Accordingly, the above proposed modifications to the 2015 ATSC 3.0 working draft would allow the proposed receiver to easily retrieve the PLPs in the enhanced layer with minimum modification. The only modification would be to modify frame extraction unit or block 404 shown in Fig. 4 to also be able to recognize and process the LDM frame according to the accompanying metadata as described above.

Fig. 6 illustrates an exemplary process 600 according to the present principles. The exemplary process 600 starts at step 605. At step 610, a core layer with at least one physical layer pipe is provided. At step 615, an enhanced layer with at least one physical layer pipe is provided. At step 620, the core layer and the enhanced layer are combined to provide a layered division multiplexed signal. At step 625, the layer division multiplexed signal is time interleaved to provide a time interleaved signal for transmission. Also at step 620, a layered division multiplexing frame is formed before the time interleaving of the layered division multiplexed signal by the time interleaver at step 625 for grouping the at least one physical layer pipe of the core layer with at least one corresponding physical layer pipe of the enhanced layer.

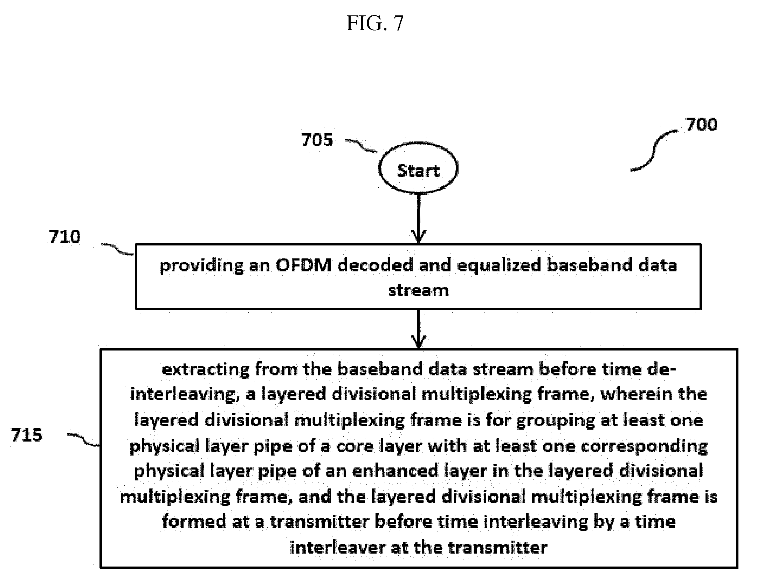

Fig. 7 illustrates another exemplary process 700 according to the present principles. The exemplary process 700 starts at step 705. At step 710, an OFDM decoded and equalized baseband data stream is provided. At step 715, the exemplary method extracts from the baseband data stream before time deinterleaving, via, e.g., a frame extraction unit, a layered divisional multiplexing frame. As indicated before, the layered divisional multiplexing frame is for grouping the at least one physical layer pipe of a core layer with at least one corresponding physical layer pipe of an enhanced layer in the layered divisional multiplexing frame, and the layered divisional multiplexing frame is formed at the transmitter before the time interleaving by the time interleaver at the transmitter.

In view of the above, the foregoing merely illustrates the present principles, and it will thus be appreciated that those skilled in the art will be able to devise numerous alternative arrangements which, although not explicitly described herein, embody the present principles and are within its scope. For example, although illustrated in the context of separate functional elements, the various functional elements of a transmitter and/or receiver may be embodied in one, or more, integrated circuits (ICs). Similarly, although shown as separate elements, any or all of the elements may be implemented in a stored-program-controlled processor, e.g., a digital signal processor, which executes associated software, e.g., corresponding to one, or more, of steps. In addition, the present principles may apply to other multi-carrier modulation systems besides OFDM, e.g., discrete multi-tone (DMT) and to other types of single-carrier or multi-carrier pre-existing or legacy systems besides 8-VSB, e.g., single carrier QAM modulation. Further, the present principles are applicable to other types of communications systems, e.g., Wireless-Fidelity (Wi-Fi), cellular, cable, satellite, etc. Indeed, the inventive concept is also applicable to stationary or mobile receivers. It is therefore to be understood that numerous modifications may be made to the illustrative embodiments and that other arrangements may be devised without departing from the scope of the present principles.

## Claims

1. An apparatus comprising:
a first bit interleaved and coded modulation unit configured to provide a core layer with at least one physical layer pipe (302)
a second bit interleaved and coded modulation unit configured to provide an enhanced layer with at least one physical layer pipe (307);
a layered division multiplexing injector configured to combine the core layer and the enhanced layer for providing a layered division multiplexed signal (303); and
a time interleaver configured to time interleave the layer division multiplexed signal to provide a time interleaved signal for transmission (304);
wherein the apparatus further comprising a layered divisional multiplexing frame builder unit (350) configured to form a layered division multiplexing frame before the time interleaving of the layered division multiplexed signal by the time interleaver for grouping the at least one physical layer pipe of the core layer with at least one corresponding physical layer pipe of the enhanced layer.

2. The apparatus of claim 1 wherein the layered divisional multiplexing frame builder unit is a part of the layered divisional multiplexing injector.

3. The apparatus of claim 1 wherein the layered divisional multiplexing frame builder unit is further configured to assign a group number to the grouping of the at least one physical layer pipe of the core layer with at least one corresponding physical layer pipe of the enhanced layer.

4. The apparatus of claim 3 wherein the group number is indicated in L1D_LDM_group_id field in ATSC 3.0 L1-Detail signaling.

5. The apparatus of claim 1 wherein the layered divisional multiplexing frame builder unit is further configured to indicate a position of a physical layer pipe of the enhanced layer by using an offset from a beginning of a first physical layer pipe of the core layer within the layered divisional multiplexing frame.

6. The apparatus of the claim 5 wherein the offset is indicated in L1D_plp_start field in ATSC 3.0 L1-Detail signaling.

7. The apparatus of claim 5 wherein the layered divisional multiplexing frame builder unit is further configured to indicate a length of the physical layer pipe of the enhanced layer.

8. The apparatus of claim 7 wherein the length is indicated in L1D_plp_size field in ATSC 3.0 L1-Detail signaling.

9. A method comprising:
providing, via a first bit interleaved and coded modulation unit, a core layer with at least one physical layer pipe (610);
providing, via a second bit interleaved and coded modulation unit, an enhanced layer with at least one physical layer pipe (615);
combining, via a layered division multiplexing injector, the core layer and the enhanced layer to provide a layered division multiplexed signal (620); and
time interleaving, via a time interleaver, the layer division multiplexed signal to provide a time interleaved signal for transmission (625);
wherein the method further comprising forming, via a layered divisional multiplexing frame builder unit, a layered division multiplexing frame before the time interleaving of the layered division multiplexed signal by the time interleaver for grouping the at least one physical layer pipe of the core layer with at least one corresponding physical layer pipe of the enhanced layer (620).

10. A computer program product stored in a non-transitory computer-readable storage medium, comprising computer-executable instructions for:
providing a core layer with at least one physical layer pipe (610);
providing an enhanced layer with at least one physical layer pipe (615);
combing the core layer and the enhanced layer to provide a layered division multiplexed signal (620); and
time interleaving the layer division multiplexed signal to provide a time interleaved signal for transmission (625);
wherein the instructions further comprising forming a layered division multiplexing frame before the time interleaving of the layered division multiplexed signal by the time interleaver for grouping the at least one physical layer pipe of the core layer with at least one corresponding physical layer pipe of the enhanced layer (620).

11. An apparatus comprising:
an OFDM and equalization unit configured to provide an OFDM decoded and equalized baseband data stream (403);
a frame extraction unit (404) configured to extract from the baseband data stream, before time de-interleaving, a layered divisional multiplexing frame, wherein the layered divisional multiplexing frame is for grouping at least one physical layer pipe of a core layer with at least one corresponding physical layer pipe of an enhanced layer in the layered divisional multiplexing frame, and the layered divisional multiplexing frame is formed at a transmitter before time interleaving by a time interleaver at the transmitter.

12. The apparatus of claim 11 wherein the extraction of the layered divisional multiplexing frame is based on a group number assigned to the grouping of the at least one physical layer pipe of the core layer with the at least one corresponding physical layer pipe of the enhanced layer.

13. The apparatus of claim 12 wherein the group number is indicated in L1D_LDM_group_id field in ATSC 3.0 L1-Detail signaling.

14. A method comprising:
providing, via an OFDM and equalization unit, an OFDM decoded and equalized baseband data stream (710);
extracting from the baseband data stream before time de-interleaving, via a frame extraction unit, a layered divisional multiplexing frame, wherein the layered divisional multiplexing frame is for grouping at least one physical layer pipe of a core layer with at least one corresponding physical layer pipe of an enhanced layer in the layered divisional multiplexing frame, and the layered divisional multiplexing frame is formed at a transmitter before time interleaving by a time interleaver at the transmitter (715).

15. The method of claim 14 wherein the extracting of the layered divisional multiplexing frame is based on a group number assigned to the grouping of the at least one physical layer pipe of the core layer with the at least one corresponding physical layer pipe of the enhanced layer.
